# EUROPÄISCHE PATENTSCHRIFT

(11) **EP 1 655 824 B1**
(45) Veröffentlichungstag und Bekanntmachung des Hinweises auf die Patenterteilung: **09.04.2008**
(21) Anmeldenummer: 05016056.3
(22) Anmeldetag: 23.07.2005
(51) Int. Cl.: H02K 41/02

(54) **Linearmotor mit Segmentstator**
Linear motor with a segmented stator
Moteur linéaire avec un stator segmenté

(30) Priorität: 08.11.2004 CH 18312004
(43) Veröffentlichungstag der Anmeldung: 10.05.2006
(73) Patentinhaber: Etel S.A., 2112 Môtiers (CH)
(72) Erfinder: Morel, Jean-Pierre, 25300 Les Fourgs (FR)
(74) Vertreter: Hofmann, Ernst

(56) Entgegenhaltungen:
- EP-A- 0 959 549
- DE-A1- 10 253 136
- DE-A1- 10 317 014
- US-B1- 6 407 471
- PATENT ABSTRACTS OF JAPAN Bd. 2003, Nr. 12, 5. Dezember 2003 (2003-12-05) & JP 2004 289899 A (MITSUBISHI ELECTRIC CORP), 14. Oktober 2004 (2004-10-14)

## Beschreibung

Die vorliegende Erfindung betrifft einen Linearmotor, dessen beweglicher Teil einen Stator aufweist, der aus mehreren Einzelteilen gebildet ist, die in der Längsrichtung dieses beweglichen Teils zusammengefügt sind.

Ein Linearmotorstator, der in mehrere Einzelteile oder Teile, die zusammengefügt werden, nachdem diese Einzelteile oder Teile gefertigt wurden, segmentiert ist, weist mehrere Vorteile auf.

Zunächst ist es möglich, ein Basiseinzelteil festzulegen, das eine Grundlänge für den Statorkörper aufweist. Beim endgültigen Zusammenfügen des Stators ist es möglich, seine Länge nach der Art des konstruierten Linearmotors oder nach der Anwendung, für die er gedacht ist, zu ändern, indem man eine variable Anzahl von vorgefertigten Basiseinzelteilen zusammenfügt. Anschließend ermöglicht es eine derartige Konstruktion, die beiden Endteile oder -zähne vom Statorkörper getrennt zu fertigen und sie dann mit diesem Körper in einem weiteren Schritt zusammenzufügen.

Aus der Druckschrift US 6 713 899 ist ein Linearmotor bekannt, dessen beweglicher Teil von einem Stator gebildet ist, der einen Körper und mit diesem Körper zusammengefügte Endzähne umfasst. Die Endteile oder - zähne weisen die Form eines umgekehrten Ls mit einem in eine obere Aussparung des Statorkörpers eingedrückten rechteckigen Endvorsprung auf, wobei diese Aussparung in der Oberseite dieses Körpers eingearbeitet ist. Somit ist der Endzahn nur an seinem oberen Ende befestigt. Die Starrheit eines derartigen Aufbaus ist nicht richtig sichergestellt. Angesichts der Tatsache, dass der Endzahn nur an seinem oberen Ende befestigt ist, können an dem unteren Teil, der sich auf der Seite der Dauermagneten des Motors befindet, Vibrationen erzeugt werden. Da nämlich der Kontakt zwischen den Seitenflächen an der Verbindung zwischen dem Endzahn und dem Körper nicht durch eine spezifische Befestigung sichergestellt ist, können sich diese Seitenflächen also leicht voneinander entfernen, und zwar entweder dynamische indem sie Vibrationen erzeugen, oder statisch, indem sie einen Zwischenraum zwischen dem Endteil und dem Statorkörper erzeugen.

Aus der Druckschrift DE 3 110 339 ist ein Linearmotor mit einem Segmentstator bekannt, der es ermöglicht, einen relativ langen Stator auszubilden. Nach dieser Druckschrift wird ein langer Stator durch Zusammenfügen von elementaren Statoreinzelteilen, die einen funktionsfähigen Stator mit einer gegebenen Einheitslänge festlegen, ausgebildet. Somit umfasst das grundlegende Statoreinzelteil eine Vielzahl von Zähnen, die Einkerbungen für Spulen und zwei Endzähne, deren Unterseite eine Ebene festlegt, die gegenüber einer waagerechten Richtung, die der Bewegungsrichtung des Stators entspricht, geneigt ist, festlegen. Die elementaren Statoreinzelteile werden anhand von separaten Befestigungselementen zusammengefügt, die in einem oberen Teil des Stators angeordnet sind und auf beiden Seiten der Verbindung zwischen zwei Statorteilen in T-förmige Aussparungen in den Oberseiten der beiden jeweiligen Statoreinzelteile eingefügt sind. Diese Zusammenfügungsmittel weisen die gleichen Nachteile wie die mit Bezug auf die vorhergehende Druckschrift beschriebenen auf. Die Statoreinzelteile werden nämlich nur durch Befestigungsmittel zusammengefügt, die auf den oberen Seiten dieser Statoreinzelteile angeordnet sind. Somit ist eine Spaltung dieser Einzelteile und Vibrationen nicht auszuschließen. Das dynamische Verhalten des Stators kann also gestört werden, was bei Anwendungen, bei denen der bewegliche Teil großen Beschleunigungen unterzogen wird, ungünstig ist. Der in dieser Druckschrift vorgeschlagene Segmentstator weist einen weiteren größeren Nachteil auf, dadurch dass der an der Verbindung zwischen zwei Statoreinzelteilen gebildete Zahn keine ebene und waagerechte Unterseite wie die der anderen Zähne aufweist. Dies erhöht den Reluktanzeffekt des Stators und verringert seine Leistungsfähigkeit.

Aus den Druckschriften EP 0959549 A1 und JP 2004289899 A sind weitere Linearmotoren mit Segmentstatoren mit ähnlichen Nachteilen bekannt.

Aus der Druckschrift US 6407471, von der diese Erfindung ausgeht, ist ein Linearmotor mit Segmentstator bekannt, dessen Segmente durch Befestigungsmittel zusammengefügt werden, die an jeder Verbindung zwischen zwei anliegenden Einzelteilen vorgesehen sind, wobei diese Befestigungsmittel von zwei anliegenden Einzelteilen mindestens eine Aussparung umfassen, die in der einen oder der anderen der jeweiligen ersten und zweiten Gesamtseitenflächen, die sich an der Verbindung zwischen diesen beiden Einzelteilen befinden, angeordnet ist, wobei diese Aussparung ausschließlich in diese erste oder zweite Gesamtseitenfläche einmündet und mindestens eine Blockierungsfläche für ein ergänzendes Teil der Befestigungsmittel festlegt, um die ersten und zweiten Gesamtseitenflächen gegeneinander zu drücken. Die Stabilität und der Reluktanzeffekt dieses Linearmotors sind aus den oben genannten Gründen verbesserungsfähig.

Aufgabe der Erfindung ist es, einen Linearmotor bereitzustellen, der einen aus mehreren Einzelteilen gebildeten Segmentstator aufweist, der eine Lösung für die Probleme des oben genannten Stands der Technik erbringt.

Dazu betrifft die vorliegende Erfindung einen Linearmotor gemäß Anspruch 1. Vorteilhafte Ausgestaltungen der erfindung sind in weiteren ansprüchen angegeben.

Aus den Merkmalen der Erfindung ergibt sich eine starre Befestigung an der Verbindung zwischen zwei anliegenden Statoreinzelteilen, wodurch Vibrationen des Stators im Betrieb vermieden werden können und ein richtiges Gegeneinanderdrücken der Gesamtseitenflächen in Kontakt mit der Verbindung zwischen zwei Statoreinzelteilen sichergestellt ist.

Bei einer bevorzugten Ausführungsform sind die Befestigungsmittel nur von einem oder mehreren vorgewölbten Teilen, die von der ersten und/oder der zweiten Gesamtseitenfläche an der Verbindung zwischen den ersten und zweiten anliegenden Einzelteilen vorspringen, und von einer oder mehreren jeweiligen Aussparungen mit einer Form, die im Wesentlichen dem oder den vorgesehenen vorgewölbten Teilen in dem zweiten oder/und ersten Einzelteil entspricht, gebildet. Dieser bzw. diese vorgewölbten Teile werden derart in die jeweilige(n) Aussparung(en) eingefügt, dass sie das starre Zusammenfügen der ersten und zweiten Einzelteile sicherstellen.

Bei einer bevorzugten Alternative weisen die vorgewölbten Teile und die Aussparungen eine Schwalbenschwanzform auf.

Nach einer im Rahmen der vorliegenden Erfindung vorgesehenen Weiterbildung werden die Befestigungsmittel an einer Verbindung zwischen zwei Statoreinzelteilen durch das Profil ihrer jeweiligen Seitenflächen an dieser Verbindung ausgebildet und weisen eine Axialsymmetrie an einer mittigen Querachse auf. Zudem weisen die Endeinzelteile jeweils Ober- und Unterseiten auf, die eine Ebenensymmetrie an einer mittleren geometrischen Ebene aufweisen. Durch diese besonderen Merkmale ist es möglich, zwei gleiche Endteile an den beiden Enden des Stators anzuordnen. Somit.ist es möglich, Statoren variabler Länge zu konstruieren, indem man nur zwei Einzelteilarten verwendet, nämlich ein elementares Statoreinzelteil, um den Statorkörper zu bilden, und ein Endteil, das auf beiden Seiten des Statorkörpers angefügt werden kann.

Weitere besondere Merkmale der vorliegenden Erfindung und andere Vorteile gehen ebenfalls aus der folgenden Beschreibung hervor, die mit Bezug auf die beiliegende Zeichnung erfolgt, die beispielhaft und in keiner Weise einschränkend angegeben wird. Es zeigen:
- Fig. 1: eine erste bevorzugte Ausführungsform der Erfindung vor und nach dem Zusammenfügen der Statoreinzelteile;
- Fig. 2: einen Stator eines Linearmotors, der länger ist als der aus Fig. 1, mit einem in zwei gleiche Statoreinzelteile segmentierten Körper;
- Fig. 3 und 4: genauer die Befestigungsmittel der den Stator aus Fig. 1 und 2 bildenden Einzelteile;
- Fig.5: ein Statoreinzelteil einer anderen, nicht erfindungsgemäßen Ausführungsform; und
- Fig. 6: eine andere Ausführungsform der Befestigungsmittel von zwei Statoreinzelteilen.

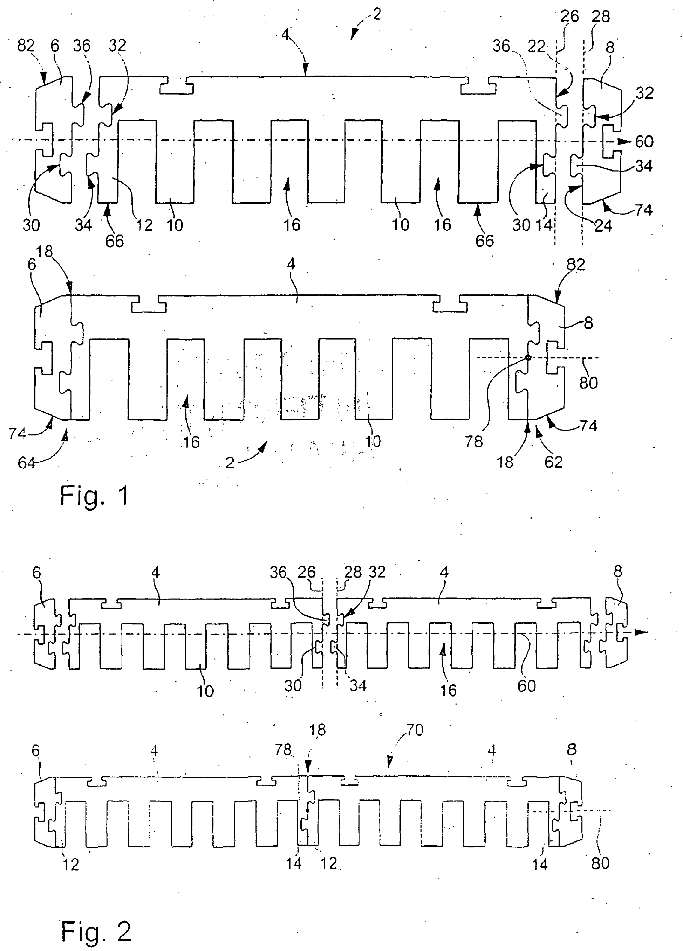

Anhand der Fig. 1 bis 4 soll nachstehend eine erste bevorzugte Ausführungsform eines erfindungsgemäßen Linearmotors beschrieben werden.

Da die vorliegende Erfindung die Ausbildung des Stators des beweglichen Teils des Linearmotors betrifft, stellen die verschiedenen Figuren schematisch nur diesen Stator dar. Der Fachmann kennt die Teile des nicht dargestellten Linearmotors, insbesondere die Magnetstrecke, die einen feststehenden Induktor bildet, der gegenüber den Statorzähnen und den Spulen, die im Innern der durch den Stator festgelegten Einkerbungen vorgesehen sind, angeordnet ist.

Der in Fig. 1 dargestellte Stator 2 ist in drei separate Einzelteile segmentiert: ein elementares Einzelteil 4, das den Statorkörper bildet, und zwei Endeinzelteile 6 und 8, die auf beiden Seiten des Einzelteils 4 angeordnet sind, mit dem sie durch Befestigungsmittel zusammengefügt sind, die Gegenstand der vorliegenden Erfindung sind.

Das Statoreinzelteil 4, das den Statorkörper bildet, umfasst eine Vielzahl von ganzen Zähnen 10 und zwei Teilzähne 12 und 14 an den beiden Enden dieses Einzelteils 4. Diese ganzen und Teilzähne legen Einkerbungen 16 fest, in denen (nicht dargestellte) Spulen angeordnet sind.

An jeder Verbindung 18 zwischen zwei anliegenden Statoreinzelteilen 4 und 6, bzw. 4 und 8, sind Befestigungsmittel vorgesehen, die im Innern der Gesamtseitenwände 22 und 24 der beiden jeweiligen anliegenden Statoreinzelteile angeordnet sind. Die Gesamtseitenflächen 22 und 24 sind durch die ebenen Querflächen an den beiden Linien 26 und 28 festgelegt. Diese beiden Gesamtseitenflächen bilden im Wesentlichen die Kontaktflächen zwischen den anliegenden Teilen an der Verbindung dazwischen, mit Ausnahme der Kontaktflächen, die an den Befestigungsmitteln selber vorgesehen sind. Bei der bevorzugten und weiterentwickelten Ausführungsform, die in Fig. 1 bis 4 dargestellt ist, umfassen die Befestigungsmittel eine Aussparung 30, bzw. 32, die in jeder der Gesamtseitenflächen 22 und 24 vorgesehen ist. Diese beiden Aussparungen 30 und 32 weisen eine Schwalbenschwanzform auf und münden ausschließlich in die jeweiligen Gesamtseitenflächen 22 und 24 ein. Die ergänzenden Teile 34 und 36, die von den vorgewölbten Teilen gebildet werden, die jeweils von den beiden Gesamtseitenflächen 24 und 22 aus vorstehen, sind jeweils an den vorgesehenen Aussparungen angeordnet. Diese vorgewölbten Teile weisen ebenfalls eine Schwalbenschwanzform auf.

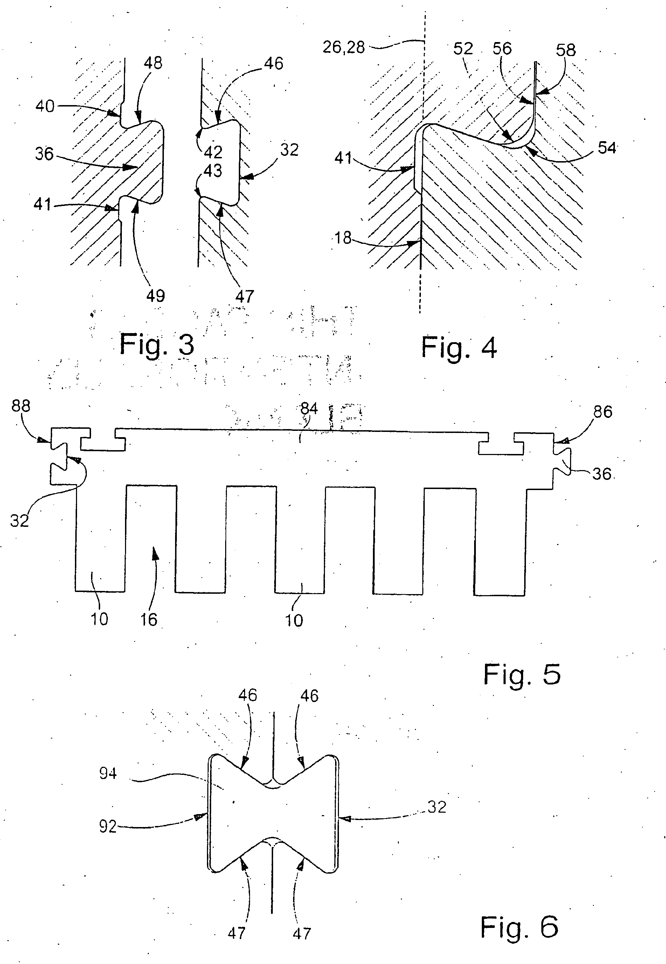

In Fig. 3 und 4 sind teilweise und vergrößert die Befestigungsmittel der Statoreinzelteile dargestellt. Auf beiden Seiten des vorgewölbten Teils 36 sind bevorzugt zwei geringfügige Aushöhlungen 40 und 41 vorgesehen, die es ermöglichen, die Seitenteile des vorgewölbten Teils durch einen spezifischen Stanzstempel zu bilden und die Basis des vorgewölbten Teils ausreichend freizulegen. Ein ungehindertes Eindringen der Ränder 42 und 43 der Aussparung 32 ist somit sichergestellt. Diese Ränder 42 und 43 können auch sehr geringfügig verformt werden und teilweise in die Aushöhlungen 40 und 41 eindringen. Dadurch können die Gesamtseitenflächen 22 und 24 an der Verbindung 18 zwischen den Statoreinzelteilen gegeneinander gedrückt werden. Die Aussparung 32 legt zwei Blockierungsflächen 46 und 47 fest, an denen die entsprechenden Seitenteile 48 und 49 des vorgewölbten Teils 36 fest anliegen. Die spezifische Verarbeitung des vorgewölbten Teils 36 mit der geringfügigen Aushöhlung, die auf beiden Seiten dieses vorgewölbten Teils vorgesehen ist, und eine genaue Bemessung der Aussparung 32 ermöglichen es, den vorgewölbten Teil seitlich in die Aussparung einzutreiben oder einzudrücken, wodurch ein starres Gegeneinanderdrücken der Gesamtseitenflächen 22 und 24 garantiert wird, was sich aus dem Gegeneinanderdrücken unter Druck der Blockierungsflächen 46 und 47 mit den entsprechenden Seitenteilen 48 und 49 des vorgewölbten Teils ergibt. Um ein Problem mit dem oberen Rand 52 des vorgewölbten Teils zu vermeiden, ist der innere Winker 54 der Aussparung 32 etwas tiefer vorgesehen und die Bemessung des vorgewölbten Teils ist derart vorgesehen, dass die Außenfläche 56 dieses vorgewölbten Teils auf die ebene Oberfläche 58 des Bodens der Aussparung 32 drückt.

Noch einmal mit Bezug auf Fig. 1 ist zu beachten, dass die Statoreinzelteile in der Längsrichtung 60 des Stators zusammengefügt sind, wobei diese Längsrichtung zu der Bewegungsrichtung des durch den Stator 2 gebildeten beweglichen Teils parallel ist. Danach geht die Verbindung 18 zwischen zwei anliegenden Statoreinzelteilen durch einen Zahn des Stators. Die Befestigungsmittel sind mindestens teilweise an dem Zahn 62, bzw. 64, angeordnet, die durch die Verbindung der beiden Statoreinzelteile gebildet werden. Der vorgewölbte Teil 34 und die entsprechende Aussparung 30 sind nämlich an dem Endzahn 62, bzw. 64, angeordnet. Das elementare Einzelteil 4, das den Körper des Stators bildet, weist ganze Zähne 10 und zwei Teilzähne 12 und 14 auf, die alle eine Unterseite 66 aufweisen, die waagerecht ist, d.h. parallel zu der Längsrichtung 60 und rechtwinklig zu der Ebene der Fig. 1. Dieses Merkmal ist von großem Vorteil, wenn der Körper des Stators segmentiert ist, d.h. aus mehreren elementaren Statoreinzelteilen 4 gebildet ist, wie in Fig. 2 dargestellt. In dieser Fig. 2 umfasst der Stator 70 einen Körper, der aus zwei identischen Statoreinzelteilen 4 und zwei ebenfalls identischen Endteilen 6 und 8 gebildet ist, wie nachstehend genauer erklärt werden soll. Dadurch dass die Teilzähne 12 und 14 an den Enden der Statoreinzelteile 4 eine ebene und waagerechte Unterseite aufweisen, weist der durch die Verbindung 18 der beiden elementaren Einzelteile 4 gebildete Zahn eine Form auf, die mit derjenigen der ganzen Zähne dieser elementaren Einzelteile 4 identisch ist, insbesondere eine ebenfalls ebene und waagerechte Unterseite. Dies ermöglicht es, jegliche Singularität an dem Stator zu vermeiden.

Es ist zu beachten, dass dadurch dass die Befestigungsmittel mindestens teilweise an dem an der Verbindung 18 gebildeten Zahn vorgesehen wurden, es möglich ist, eine starre und starke Zusammenfügung der beiden den Verbindungszahn bildenden Teilzähne 12 und 14 zu garantieren.

Um das dynamische Verhalten des beweglichen Teils durch Verringern des Reluktanzeffekts zu verbessern, weisen die Endeinzelteile 6 und 8 eine Unterseite 74 auf, die nicht waagerecht ist. In dem in Fig. 1 und 2 dargestellten Fall weist die Oberfläche 74 einen zu der Längsrichtung 60 schräg ausgerichteten Teil auf. Da die Endteile 6 und 8 ursprünglich als separates Element gefertigt werden, ist es möglich, relativ kompliziert gebildete Unterseiten 74 vorzusehen, die es ermöglichen, die Reduzierung des Reluktanzeffekts zu optimieren.

Nach der bevorzugten und weiter gebildeten Ausführungsform, die in Fig. 1 und 2 dargestellt ist, weisen die Befestigungsmittel eine Axialsymmetrie an einer mittigen Querachse 78 auf, die sich an der Verbindung 18 zwischen zwei anliegenden Einzelteilen befindet. Zudem weist das Endeinzelteil 6, bzw. 8, eine Ebenensymmetrie an einer mittleren geometrischen Ebene 80 auf. Somit weist die Oberseite 82 der Endeinzelteile 6 und 8 ein Profil auf, das mit demjenigen der Unterseite 74 identisch ist, wobei die Oberseite 82 durch die oben genannte Ebenensymmetrie das Spiegelbild der Unterseite 74 ist. Durch dieses besondere Merkmal braucht man das Endeinzelteil 8 nur um einen Winkel von 180° um die Querachse 78 zu drehen, um den anderen Endzahn 6 zu erhalten, der sich auf der anderen Seite des Statorkörpers befindet. Somit werden die beiden Endzähne 6 und 8 aus zwei identischen Einzelteilen gebildet. Durch die Verarbeitung von nur zwei Einzelteilarten, nämlich eines elementaren Statoreinzelteils 4 und eines Endeinzelteils 6 kann man Statoren von Linearmotoren variabler Länge ausbilden, welche die zuvor erwähnten verschiedenen Vorteile aufweisen. Dies ermöglicht es, die Herstellung zu optimieren und ihre Kosten zu verringern. Zudem wird das Zusammenfügen erleichtert, da die beiden Einzelteile oder Endzähne identisch geformt sind.

In Fig. 5 ist ein elementares Statoreinzelteil 84 einer zweiten Ausführungsform eines nicht erfindungsgemäßen Linearmotors dargestellt. Zunächst ist zu beachten, dass diese zweite Ausführungsform nicht so weit entwickelt ist wie die erste und nicht alle ihre wichtigen Vorteile übernimmt. Diese zweite Ausführungsform ergibt sich jedoch aus dem Gesamtkonzept der Erfindung, das vorsieht, dass sich die Befestigungsmittel der elementaren Statoreinzelteile zum Bilden eines Segmentstators im Innern der Verbindung befinden. Im Gegensatz zu der ersten Ausführungsform erfolgt die Verbindung zwischen zwei anliegenden Statoreinzelteilen an einer Einkerbung. Somit haben die Gesamtseitenflächen in Kontakt mit der Verbindung eine Länge, die geringer ist als diejenige, die sich aus der Anordnung der ersten Ausführungsform ergibt. In der Gesamtseitenfläche 88 ist eine Aussparung 32 vorgesehen, die der zuvor beschriebenen ähnlich ist. Auf der anderen Seite des Einzelteils 84 ist ein vorgewölbter Teil 36 vorgesehen, der von der Gesamtseitenfläche 86 ab vorsteht. Beim Zusammenfügen von zwei Statoreinzelteilen werden die Oberflächen 86 und 88 in Kontakt gebracht und bilden die Verbindung zwischen diesen Einzelteilen, wobei die Befestigungsmittel durch das Einfügen eines vorgewölbten Teils 36 in eine schwalbenschwanzförmige Aussparung 32 gebildet werden. Der vorgewölbte Teil 36 und die Aussparung 32 werden den Einzelheiten der in Fig. 3 und 4 dargestellten Konstruktion entsprechend ausgebildet.

Somit werden die Befestigungsmittel an einer Verbindung zwischen ersten und zweiten Statoreinzelteilen durch einen oder mehrere vorgewölbte Teile, die von der ersten oder/und zweiten Gesamtseitenfläche dieser beiden anliegenden Einzelteile ab vorstehen, und von einer oder mehreren jeweiligen Aussparungen, die in der zweiten oder/und ersten Gesamtseitenfläche vorgesehen sind, gebildet. Jeder vorgewölbte Teil wird in die entsprechende Aussparung eingefügt, die mindestens eine Blockierungsfläche dieses vorgewölbten Teils aufweist, um die beiden anliegenden Einzelteile starr zu befestigen.

Es ist insbesondere zu beachten, dass es wie bei der ersten Ausführungsform ebenfalls möglich ist, ein Zusammenfügen von zwei anliegenden Einzelteilen an einem Zahn mit Befestigungsmitteln, die aus einem einzigen vorgewölbten Teil gebildet werden, der in einem Einzelteil verarbeitet ist, das bevorzugt relativ lang gestreckt und schwalbenschwanzförmig ist, und in eine in dem anderen Einzelteil vorgesehene entsprechende Aussparung eingefügt wird, vorzusehen.

Anhand von Fig. 6 soll eine besondere Ausführungsform der Befestigungsmittel von zwei anliegenden Einzelteilen eines Segmentstators beschrieben werden. Bei dieser Ausführungsform umfassen die Befestigungsmittel Aussparungen 32 und 92, die in den beiden Gesamtseitenflächen von zwei anliegenden Einzelteilen bereitgestellt werden, die sich an einer Verbindung zwischen diesen beiden anlegenden Einzelteilen befinden. Wie bei den anderen. Ausführungsformen münden die Aussparungen ausschließlich in die Gesamtseitenflächen der elementaren Statoreinzelteile ein. Die Aussparungen 32 und 92 befinden sich einander gegenüber, wenn zwei anliegende Einzelteile zusammengefügt werden, und ein schmetterlingsförmiges Befestigungseinzelteil wird in die beiden Aussparungen 32 und 92 eingefügt, um die beiden Gesamtseitenflächen gegeneinander zu drücken. Die Aussparungen 32 und 92 legen jeweils zwei Blockierungsflächen 46 und 47 fest, an denen die entsprechenden Oberflächen des Einzelteils 94 anliegen. Dieses Einzelteil 94 kann genau verarbeitet werden, um eine sehr starre Befestigung zu garantieren, wenn es bei dem Zusammenfügen des Stators in die beiden Aussparungen 32 und 92 eingetrieben wird.

## Patentansprüche

1. Linearmotor, umfassend einen beweglichen Teil und einen feststehenden Induktor, wobei dieser bewegliche Teil aus einem Stator (2) und Spulen gebildet ist, wobei dieser Stator eine Vielzahl von Zähnen (10) aufweist, die eine Vielzahl von Einkerbungen (16) festlegen, in denen die Spulen angeordnet sind, wobei dieser Stator in mehrere Einzelteile (4, 6, 8; 84) segmentiert ist, die durch Befestigungsmittel zusammengefügt werden, die an jeder Verbindung (18) zwischen zwei anliegenden Einzelteilen vorgesehen sind, wobei diese Befestigungsmittel von zwei anliegenden Einzelteilen mindestens eine Aussparung umfassen, die in der einen oder der anderen der jeweiligen ersten und zweiten Gesamtseitenflächen (22, 24; 86, 88), die sich an der Verbindung zwischen diesen beiden Einzelteilen befinden, angeordnet ist, wobei diese Aussparung ausschließlich in diese erste oder zweite Gesamtseitenfläche einmündet und mindestens eine Blockierungsfläche (46, 47) für ein ergänzendes Teil (36, 94) der Befestigungsmittel festlegt, um die ersten und zweiten Gesamtseitenflächen gegeneinander zu drücken, **dadurch gekennzeichnet, dass** jede Verbindung zwischen zwei anliegenden Statoreinzelteilen durch einen Statorzahn, senkrecht zu der Längsrichtung (60) des Linearmotors, geht, wobei die Befestigungsmittel an der Verbindung zwischen zwei anliegenden Statoreinzelteilen mindestens teilweise an dem Zahn angeordnet sind, der von den beiden Teilzähnen (12, 14) der beiden jeweiligen anliegenden Einzelteile an der Verbindung zwischen diesen beiden Einzelteilen gebildet wird, und dass der Stator aus einem Körper und zwei auf beiden Seiten dieses Körpers angefügten Endeinzelteilen (6, 8) gebildet wird, wobei der Körper aus einem oder mehreren identischen elementaren Einzelteilen gebildet wird, wobei die ganzen Zähne und die Teilzähne (12, 14) jedes elementaren Einzelteils (4, 84) eine im Wesentlichen waagerechte Unterseite aufweisen, während die beiden Endeinzelteile jeweils einen Zahn festlegen, der eine nicht waagerechte untere Endunterseite aufweist.

2. Linearmotor nach Anspruch 1, **dadurch gekennzeichnet, dass** die Befestigungsmittel an einer Verbindung zwischen ersten und zweiten Statoreinzelteilen nur von einem oder mehreren vorgewölbten Teilen, die von der ersten und/oder zweiten Gesamtseitenfläche ab vorspringen, und von einer oder mehreren jeweiligen Aussparungen mit einer Form, die im Wesentlichen dem oder den vorgesehenen vorgewölbten Teilen in dem zweiten oder/und ersten Einzelteil entspricht, gebildet werden, wobei dieser bzw. diese vorgewölbten Teile in die jeweilige(n) Aussparung(en) eingefügt werden, die jeweils mindestens eine Blockierungsfläche des jeweiligen vorgewölbten Teils aufweisen.

3. Linearmotor nach Anspruch 2, **dadurch gekennzeichnet, dass** der oder die vorgewölbten Teile und die jeweilige(n) Aussparung(en) schwalbenschwanzförmig sind.

4. Linearmotor nach Anspruch 1, **dadurch gekennzeichnet, dass** die Befestigungsmittel an einer Verbindung zwischen zwei anliegenden Statoreinzelteilen an einer mittigen Querachse (78) eine Axialsymmetrie aufweisen, und dass jedes Endeinzelteil bezüglich der Ober- und Unterseiten an einer mittleren geometrischen Ebene (80) eine Ebenensymmetrie aufweist.

## Claims

1. Linear motor, comprising a moveable part and a stationary inductor, this moveable part being formed from a stator (2) and coils, this stator having a multiplicity of teeth (10) which define a multiplicity of notches (16) in which the coils are disposed, this stator being segmented into a plurality of individual parts (4, 6, 8; 84) which are assembled by means of attachment means which are provided at each connection (18) between two abutting individual parts, these attachment means of two abutting individual parts comprising at least one recess which is disposed in the one or in the other of the respective first and second whole side surfaces (22, 24; 86, 88) which are situated at the connection between these two individual parts, this recess opening exclusively into this first or second whole side surface and defining at least one locking surface (46, 47) for a supplementary part (36, 94) of the attachment means in order to press the first and second whole side surfaces against each other, **characterised in that** each connection between two abutting stator individual parts passes through a stator tooth, perpendicular to the longitudinal direction (60) of the linear motor, the attachment means at the connection between two abutting stator individual parts being disposed at least partially on the tooth which is formed by the two partial teeth (12, 14) of the two respective abutting individual parts at the connection between these two individual parts, and **in that** the stator is formed from a body and two end individual parts (6, 8) which are attached to both sides of this body, the body being formed from one or more identical elementary individual parts, the whole teeth and the partial teeth (12, 14) of each elementary individual part (4, 84) having an essentially horizontal underside, whilst the two end individual parts define respectively one tooth which has a non-horizontal lower end underside.

2. Linear motor according to claim 1, **characterised in that** the attachment means at a connection between first and second stator individual parts are formed only from one or more forwardly-curved parts which project from the first and/or second whole side surface and from one or more respective recesses with a shape which essentially corresponds to the provided forwardly-curved part(s) in the second and/or first individual part, this or these forwardly-curved part(s) being inserted into the respective recess(es) which respectively have at least one locking face of the respective forwardly-curved part.

3. Linear motor according to claim 2, **characterised in that** the forwardly-curved part or parts and the respective recess(es) have a dovetail shape.

4. Linear motor according to claim 1, **characterised in that** the attachment means at a connection between two abutting stator individual parts have an axis of symmetry at a central transverse axis (78) and **in that** each end individual part has a planar symmetry relative to the upper- and undersides on a central geometrical plane (80).

## Revendications

1. Moteur linéaire comprenant un inducteur fixe et une partie mobile composée de bobines et d'un stator (2) portant une pluralité de dents (10) qui déterminent une pluralité d'encoches (16) dans lesquelles sont disposées les bobines, ce stator étant segmenté en plusieurs parties individuelles (4, 6, 8 ; 84) qui sont assemblées jointivement par des moyens de fixation prévus à chaque liaison (18) entre deux parties individuelles voisines et qui présentent au moins un évidement dans l'une ou l'autre des premières et secondes portées latérales globales (22, 24 ; 86, 88) existant à chaque liaison entre ces deux parties individuelles, cet évidement débouchant exclusivement dans la première ou dans la seconde portée latérale globale et déterminant au moins une portée de blocage (46, 47) pour une partie complémentaire (36, 94) du moyen de fixation, afin de mettre en pression l'une sur l'autre la première et la seconde portée latérales globales, ce moteur linéaire présentant les caractéristiques suivantes :
- chaque liaison (18) entre deux parties individuelles de stator appliquées l'une contre l'autre passe à travers une dent de stator, perpendiculairement à la direction longitudinale du moteur linéaire de sorte que les moyens de fixation correspondant à la liaison entre deux parties individuelles de stator en contact sont, au moins en partie, disposés sur la dent constituée par les deux parties de dent (12, 13) des deux parties individuelles qui sont en contact à la liaison entre elles,
- le stator est constitué d'un corps et de deux parties individuelles d'extrémité (6, 8) disposées jointivement de part et d'autre de ce corps qui est constitué d'une ou plusieurs parties individuelles élémentaires identiques, les dents complètes et les parties de dent (12, 14) de chaque partie individuelle élémentaire (4, 84) présentant une face inférieure essentiellement horizontale tandis que les deux parties individuelles d'extrémité déterminent chacune une dent dont la face inférieure n'est pas horizontale.

2. Moteur linéaire selon la revendication 1, **caractérisé en ce que** les moyens de fixation associés à une liaison entre une première et une seconde partie individuelle de stator sont constitués seulement par une ou plusieurs pièces individuelles bombées à l'avance, qui font saillie sur la première et/ou sur la seconde portée latérale globale, et par un ou plusieurs évidements dont la forme correspond essentiellement à celle de la ou des parties bombées à l'avance qui sont prévues dans la seconde et/ou la première partie individuelle, cette ou chacune de ces parties bombées à l'avance étant montée jointivement dans l'évidement correspondant qui présente au moins une portée de blocage de cette partie bombée à l'avance.

3. Moteur linéaire selon la revendication 2, **caractérisé en ce que** la ou chacune des parties bombées à l'avance et l'évidement correspondant ont la forme d'une queue d'aronde.

4. Moteur linéaire selon la revendication 1, **caractérisé en ce que** les moyens de fixation associés à une liaison entre deux parties individuelles de stator appliquées l'une sur l'autre présentent par rapport à un axe transversal médian (78) une symétrie axiale, et que chaque partie individuelle d'extrémité présente en ce qui concerne ses faces inférieure et supérieure une symétrie par rapport à un plan médian (80).
